# EUROPÄISCHE PATENTSCHRIFT

(11) **EP 2 490 872 B1**
(45) Veröffentlichungstag und Bekanntmachung des Hinweises auf die Patenterteilung: **11.03.2015**
(21) Anmeldenummer: 10766211.6
(22) Anmeldetag: 13.10.2010
(51) Int. Cl.: B29C 33/30, B29C 47/00, B29C 43/46, B29C 43/52, B29B 9/04, B29C 47/88, B29L 7/00

(54) **WALZENKÜHLVORRICHTUNG**
ROLLER COOLING DEVICE
DISPOSITIF DE REFROIDISSEMENT À ROULEAUX

(30) Priorität: 20.10.2009 CH 16002009
(43) Veröffentlichungstag der Anmeldung: 29.08.2012
(73) Patentinhaber: BBA Innova AG, 5000 Aarau (CH)
(72) Erfinder: KIRCHHOFER, Urs, CH-6204 Sempach (CH)
(74) Vertreter: Rentsch Partner AG
(86) Internationale Anmeldenummer: PCT/CH2010/000252
(87) Internationale Veröffentlichungsnummer: WO 2011/047491

(56) Entgegenhaltungen:
- DE-U1-202005 007 844
- US-A- 5 277 108

## Beschreibung

### TECHNISCHES GEBIET

Die vorliegende Erfindung betrifft eine Walzenkühlvorrichtung zur kontinuierlichen Überführung einer heissen, fliessfähigen Masse unter Abkühlung in feste Chips, mit wenigstens einer Kühlwalze, einer Quetschwalze und einem über Umlenkrollen umlaufenden Anpressband. Die Kühl - und die Quetschwalze dienen dazu, die Masse zu einer dünnen Folie auszurollen. Das Anpressband läuft auf einem Teilumfang der Kühlwalze ab und dient dazu, die Folie dort gegen die Kühlwalze zu pressen. Üblicherweise ist weiter ein Abstreifer und ein Brecher vorhanden. Der Brecher dient dazu, die auf der Kühlwalze erstarrte und von dem Abstreifer von der Kühlwalze abgelöste Folie zu zerkleinern.

### STAND DER TECHNIK

Walzenkühlvorrichtungen dieser Art sind beispielsweise aus US-A-5 277 108 bekannt und finden Anwendung in der chemischen Industrie beispielsweise zur Verfestigung von Pulverlacken oder Tonermischungen. Um die auf die genannten Teile einwirkenden Kräfte aufnehmen zu können, müssen sie stabil gehalten sein. Dazu sind die Teile einschliesslich der beiden Walzen unter anderem im Maschinengestell beidseitig befestigt bzw. gelagert. Die Zugänglichkeit zu den Teilen zu Reinigungszwecken ist dadurch zumindest erschwert.

### DARSTELLUNG DER ERFINDUNG

In der pharmazeutischen sowie der Lebensmittelindustrie stellen sich ähnliche wie die vorgenannten Verarbeitungsaufgaben für Walzenkühler. Allerdings sind hier die Anforderungen an die Reinigung der Vorrichtung wesentlich höher. Diese muss häufiger und auch gründlicher durchgeführt werden können. Aufgabe der Erfindung ist es daher, eine Walzenkühlvorrichtung anzugeben, die einfacher und gründlicher als die bekannten gereinigt werden kann. Diese Aufgabe wird gelöst durch die Merkmale von Anspruch 1. Die erfindungsgemässe Walzenkühlvorrichtung ist demnach dadurch gekennzeichnet, dass die Kühlwalze, die Quetschwalze, die Umlenkrollen und das Anpressband nur von einer Seite aus gehalten und die Walzen nur auf dieser Seite gelagert und von dieser Seite aus angetrieben sind und dass dadurch diese Teile von der anderen Seite her zu Reinigungszwecken zugänglich und/oder demontierbar sind.

Bevorzugte Ausführungsarten der Erfindung sind in den abhängigen Ansprüchen angegeben.

Danach ist die Walzenkühlvorrichtung vorzugsweise weiter mit einem Abstreifer und einem Brecher versehen, wobei der Brecher dazu dient, die auf der Kühlwalze erstarrte und von dem Abstreifer von der Kühlwalze abgelöste Folie zu zerkleinern. Auch diese Teile sind nur von der genannten Seite aus gehalten, der Brecher nur von dieser Seite aus angetrieben dadurch von der anderen Seite her zur Reinigungszwecken zugänglich und/oder demontierbar.

Die Kühlwalze und die Quetschwalze sind jeweils bevorzugt mit einer Dichtung an einer Trennwand gegenüber ihren Lagern, Antrieben und sonstigen Versorgungseinrichtungen abgedichtet, wobei diese Dichtungen ebenfalls zu der anderen Seite hin demontierbar sind.

Die beiden Dichtungen umfassen dabei bevorzugt je einen Dichtungsring, wobei zur Demontage dieser Dichtungsringe die Kühlwalze und die Quetschwalze zwischen einer Betriebsstellung mit kleinem Walzenspalt und einer Montagestellung mit grösserem Walzenspalt gegeneinander verstellbar sind.

Der Dichtungsring einer ersten der beiden Walzen, vorzugsweise der Kühlwalze, kann dabei angrenzend an die Trennwand auf dieser Walze fixiert sein und gleitend gegenüber der Trennwand dichten.

Zur Verstellung zwischen der Betriebs- und der Montagestellung ist bevorzugt auch nur die erste Walze, beispielsweise über einen Excenter, beweglich montiert. Bei einer Verstellung dieser Walze gleitet ihr Dichtungsring entlang der Trennwand.

Der Dichtungsring der anderen Walze kann in diesem Fall mit Abstand von der Trennwand an einem mit der Trennwand verbundenen Haltering fixiert sein und gleitend auf der anderen Walze dichten.

Damit sich die beiden Dichtungsringe in der Betriebsstellung der beiden Walzen nicht in die Quere kommen, ist die eine Walze bevorzugt mit einem umlaufenden Einschnitt versehen, in welchen der Dichtungsring der anderen Walze in der Betriebsstellung eingreift. Entsprechend ist die andere Walze ebenfalls mit einem Einschnitt bzw. einer gleichwirkenden Verjüngung ihres Umfangs versehen, in welche/n auch der vorgenannte Haltering eingesetzt ist und der Dichtungsring der einen Walze in der Betriebsstellung eingreift.

Da die Kühlwalze und die Quetschwalze jeweils glatte, leicht zu reinigende Oberflächen haben, brauchen sie zur Reinigung nicht auch ausgebaut werden zu können. Sie können, abgesehen von ihrer gegenseitigen Verstellbarkeit zwischen der Betriebs- und Montagestellung, fest montiert sein, was im Hinblick auf ihre Lagerung sowie den Anschluss zumindest der Kühlwalze an einen Kühlflüssigkeitskreislauf konstruktiv von Vorteil ist.

Unter "fest montiert" sollen im vorliegenden Zusammenhang im Unterschied zu "demontierbar" Teile verstanden werden, die zumindest nicht einfach und bestimmungsgemäss auch durch den Benutzer der Vorrichtung und insbesondere nicht regelmässig zu Reinigungszwecken demontierbar sind. Selbstverständlich lassen sich auch diese Teile irgendwie demontieren, wobei diese Demontage jedoch nur herstellerseits möglich bzw. empfohlen, mit speziellen Kenntnissen oder Spezialwerkzeug möglich oder zumindest zeitaufwendiger sein soll. Bevorzugt sind die demontierbaren der genannten Teile zudem zumindest im wesentlichen ohne Werkzeug demontierbar.

Schliesslich kann noch eine vorzugsweise verfahrbare und dadurch leicht zu bewegende Schutzhaube zur Abdeckung der genannten Teile vorgesehen sein.

### KURZE ERLÄUTERUNG DER FIGUREN

Die Erfindung soll nachfolgend anhand eines Ausführungsbeispiels im Zusammenhang mit der Zeichnung näher erläutert werden. Es zeigen:
- Fig. 1: das Funktionsprinzip einer Walzenkühlvorrichtung;
- Fig. 2: eine Vorrichtung nach der Erfindung mit abgenommener Schutzhaube;
- Fig. 3: eine Explosionszeichnung der Vorrichtung von Fig. 1;
- Fig. 4: eine Explosionszeichnung nur des Bereichs mit den beiden Walzen der Vorrichtung von Fig. 1;
- Fig. 5: einen Schnitt durch die beiden Walzen; und
- Fig. 6: einen Ausschnitt A von Fig. 4 in vergrösserter Darstellung.

### WEGE ZUR AUSFÜHRUNG DER ERFINDUNG

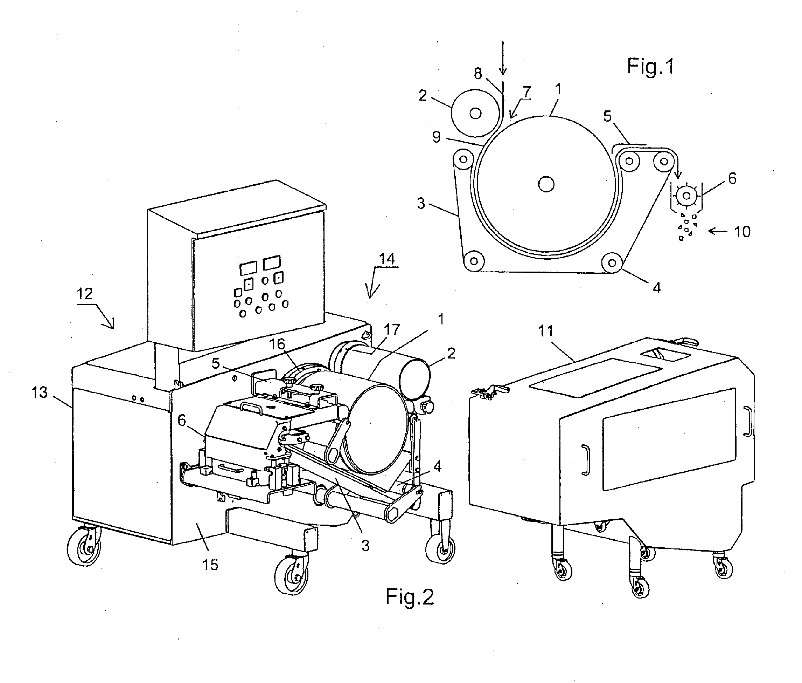

Fig. 1 zeigt schematisch das Funktionsprinzip einer Walzenkühlvorrichtung zur kontinuierlichen Überführung einer heissen, fliessfähigen Masse unter Abkühlung in feste Chips, auf dem auch die nachstehend beschriebene erfindungsgemässe Walzenkühlvorrichtung beruht. Mit 1 ist eine Kühlwalze, mit 2 eine Quetschwalze, mit 3 ein Anpressband, mit 4 eine von fünf Umlenkrollen für das Anpressband, mit 5 ein Abstreifer und mit 6 ein Brecher bezeichnet.

Die Funktion der Walzenkühlvorrichtung von Fig. 1 ist wie folgt: In den Walzenspalt 7 zwischen der Kühlwalze 1 und der Quetschwalze 2 wird ein Strang 8 einer heissen, fliessfähigen, bei geringerer Temperatur jedoch erstarrenden, z. B. thermoplastischen Masse eingeführt und durch die beiden Walzen zu einer dünnen, sich annähernd über die gesamte Breite der Walzen erstreckenden Folie 9 ausgerollt. Der Strang 8 könnte z.B. von einem Extruder kommen und eine pasteuse Konsistenz aufweisen. Die Folie 9 läuft entlang eines Teilumfangs der Kühlwalze 1, wobei sie von dem Anpressband 3 in Anlage an der Kühlwalze 1 gehalten wird. Die Kühlwalze 1 ist gekühlt, indem sie von einem Kühlmittel durchströmt wird. Die Kühlwalze 1 ist dadurch in der Lage, Wärme von der Folie 9 aufzunehmen und abzuführen. Unter dieser Abkühlung beginnt die Folie 9 zu erstarren. Mit dem Abstreifer 5 wird die zumindest teilweise bereits erstarrte Folie 9 von der Kühlwalze 1 abgelöst und nachstehend dem Brecher 6 zugeführt, durch welchen sie in einzelne Stücke zerbrochen wird. Die dabei entstehenden Chips 10 fallen nach unten und werden z.B. in einem nicht dargestellten Behälter aufgefangen.

Fig. 2 zeigt eine auf dem vorstehend erläuterten Prinzip beruhende Vorrichtung nach der Erfindung, wobei für die vorstehend bereits erwähnten Teile wieder die Bezugszeichen 1 - 6 verwendet sind. Eine während des Betriebs der Vorrichtung diese Teile abdeckende Schutzhaube 11 ist, um den Blick auf sie freizugeben, seitlich neben der Vorrichtung dargestellt. Die Schutzhaube ist auf Rollen gelagert und kann dadurch einfach entfernt werden.

Charakteristisch für die erfindungsgemässe Vorrichtung ist, dass die Teile 1 - 6 nur einseitig bzw. über Halterungen nur von einer Seite aus an einem Maschinengestell 12 gehalten sind. Die Walzen 1, 2 sind auch nur auf dieser Seite gelagert und von dieser Seite aus angetrieben. Die Teile 1 - 6 sind dadurch von der anderen Seite her zu Reinigungszwecken gut zugänglich und/oder demontierbar.

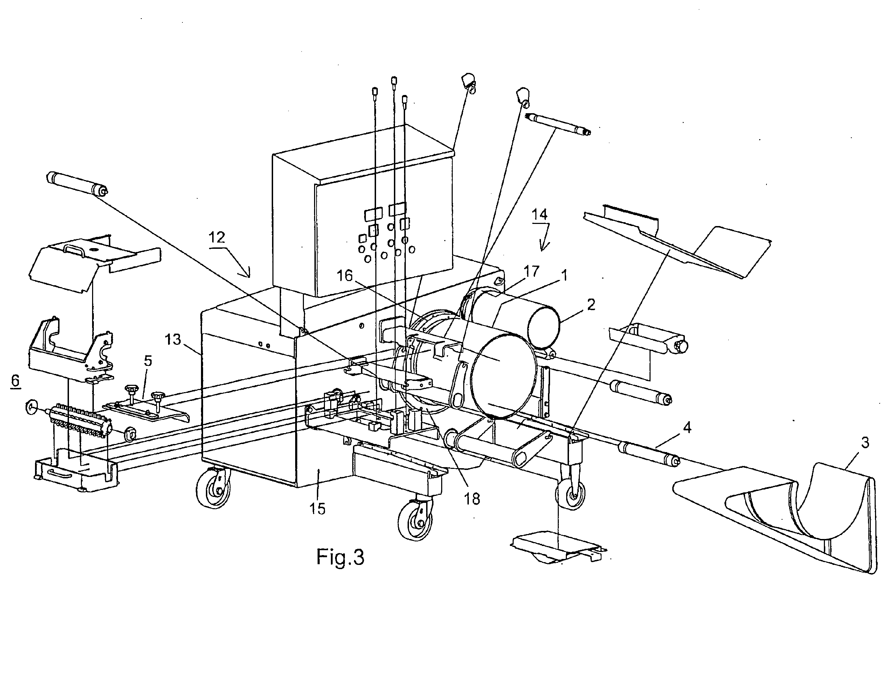

Im Maschinenraum 13 des Maschinengestells 12 sind ausser den Lagern für die beiden Walzen 1 und 2 und deren Antrieben unter anderem auch noch die Installationen zur Versorgung der Kühlwalze 1 mit der Kühlflüssigkeit enthalten. Das Maschinengestell 12 hat, wie aus den Figuren 2 und 3 ersichtlich, in axialer Richtung der Walzen 1, 2 eine relativ grosse Tiefe, da die beiden Walzen darin aus Stabilitätsgründen jeweils in zwei voneinander beabstandeten Lagern gelagert sind.

Zur Trennung des Prozessbereichs 14 mit den Teilen 1 - 6 von dem Maschinenraum 13 ist eine Trennwand 15 vorhanden. Diese dient zudem als Montagefläche für einzelne Teile im Prozessbereich 14 wie z.B. von Halterungen für die Umlenkrollen 4 und den Brecher 6. Soweit andere Teile wie z.B. die Achsen der beiden Walzen 1 und 2 oder die Antriebsachse für den Brecher 6 durch die Trennwand 15 durchgeführt sind, sind im Bereich der Trennwand Dichtungen vorhanden. Die besondere Ausführung der beiden Walzendichtungen wird unten noch näher erläutert.

Fig. 3 zeigt in einer Explosionsdarstellung, wie sich diverse Teile im Prozessbereich 14 zu Reinigungszwecken demontieren lassen, wobei mit Ausnahme der beiden Walzen 1 und 2 insbesondere diejenigen Teile, die mit dem zu verarbeitenden Material in direkte Berührung kommen, entnehmbar sind. Wie sich dies aus Fig. 3 ebenfalls entnehmen lässt, kann die Demontage der demontierbaren Teile (von den noch zu beschreibenden Schraubverbindungen abgesehen) ohne Werkzeug ausgeführt werden, da die entsprechenden Teile lediglich gesteckt oder, wie die Umlenkrollen 4 in den Schenkeln ihrer u-förmigen Halterungen, einhängt und soweit erforderlich nur mit einfach herausziehbaren Stiften gesichert sind. Zur Demontage des Anpressbandes 3 wird die in Fig. 3 mit 4 bezeichnete Umlenkrolle, welche die Funktion einer Spannrolle hat, durch Verdrehen ihrer u-förmigen Halterung seitlich verschwenkt, wodurch das Anpressband 3 entspannt wird und nach vorn herausgezogen werden kann.

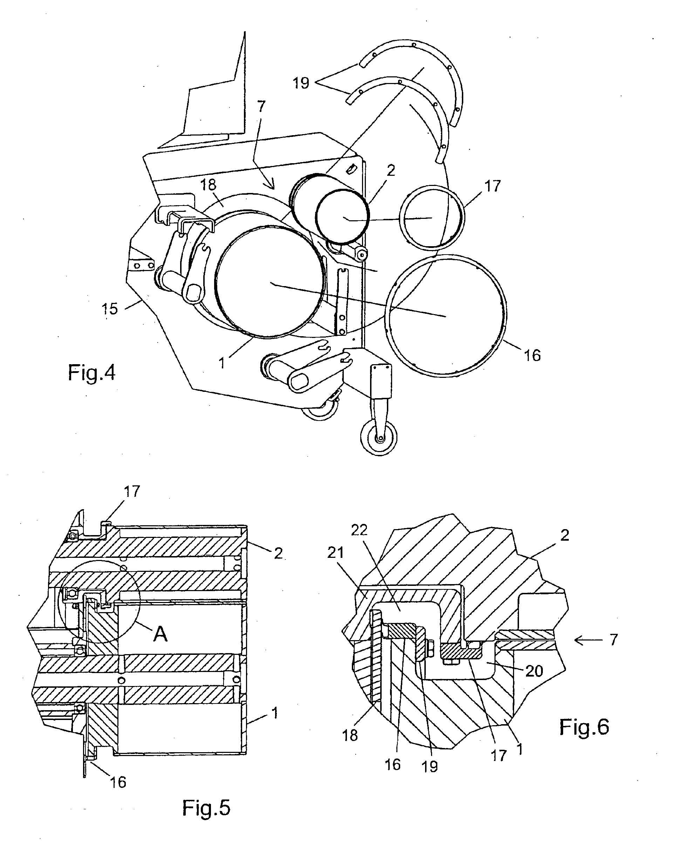

Obwohl die beiden Walzen 1 und 2 selbst nicht demontierbar sind, sind es jedoch ihre bereits angesprochenen Dichtungen gegenüber der Trennwand 15. Diese Dichtungen umfassen, wie aus Fig. 4 entnehmbar ist, an der Kühlwalze 1 einen Dichtungsring 16 und an der Quetschwalze 2 einen Dichtungsring 17. Diese Dichtungsringe 16, 17 sind von ihrem Innendurchmesser her so bemessen, dass sie sich jeweils gerade über die Umfangsfläche ihrer jeweiligen Walzen 1 bzw. 2 schieben lassen.

Wie dies in den Figuren 5 und 6 erkennbar ist, ist der Dichtungsring 16 angrenzend an die Trennwand 15 auf dem Umfang der Kühlwalze 1 angeordnet. Er dichtet dort einerseits gegenüber der Umfangsfläche der Kühlwalze 1 und andererseits mit einem Paar flexibler Dichtlippen gleitend gegenüber der Trennwand 15. An der Trennwand 15 ist zu diesem Zweck eine Dichtfläche 18 vorhanden, wobei diese Dichtfläche im vorliegenden Ausführungsbeispiel durch ein extra an der Trennwand 15 befestigtes Teil realisiert ist. Zur Fixierung des Dichtungsringes 16 in seiner dargestellten Position und zur Aufrechterhaltung eines Anpressdrucks gegenüber der Dichtfläche 18 dienen zwei Halbringe, 19, welche an der inneren Seitenfläche eines im Umfang der Kühlwalze 1 vorhandenen Einschnittes 20 in axialer Richtung angeschraubt sind. Zusätzlich kann der Dichtungsring 16, z.B. ebenfalls mit Schrauben (nicht dargestellt), auch noch auf der Umfangsfläche der Kühlwalze 1 befestigt und gegen diese in radialer Richtung gepresst sein.

Der Dichtungsring 17 für die Quetschwalze 2 ist mit Abstand von der Trennwand 15 an einem mit der Trennwand 15 dicht verbundenen, insbesondere verschweissten Haltering 21, genauer auf einer nach aussen abgebogenen Randleiste dieses Halterings angeordnet. Er dichtet einerseits gegenüber dem Haltering 21 und andererseits mit einem Paar flexibler Dichtlippen gleitend auf der Umfangsfläche der Quetschwalze 2. Fixiert ist der Dichtungsring 17 auf dem Haltering 21 mittels radialer Schrauben.

Wie dies deutlich in Fig. 6 zu erkennen ist, überlappen sich die beiden Dichtungsringe 16 und 17 im Bereich der maschinengestellseitigen Verlängerung des Walzenspaltes 7 in radialer Richtung, wobei der Quetschwalzendichtungsring 17 in den bereits erwähnten Einschnitt 20 in der Kühlwalze 1 und umgekehrt der Kühlwalzendichtungsring 16 in einen entsprechenden Einschnitt (bzw. eine maschinengestellseitige Verjüngung) 22 der Quetschwalze 2 eingreift. In diesen Einschnitt 22 ist auch der Haltering 21 eingesetzt, derart, dass der den Kühlwalzendichtungsring 16 umgreift. Auf Grund dieser Ausbildung kommen sich die beiden Dichtungsringe 16 und 17 nicht gegenseitig in die Quere.

In der vorbeschriebenen Anordnung lassen sich die beiden Dichtungsringe 16, 17 wegen des engen Walzenspaltes 7 nicht unmittelbar demontieren. Dazu muss zunächst der Walzenspalt 7 vergrössert werden. Das wird durch seitliches Verschieben zumindest einer Walze, im vorliegenden Ausführungsbeispiel der Kühlwalze 1, erreicht. In nicht dargestellter Weise wird die Kühlwalze 1 über eine exzentrische Anbringung im Maschinengestell verschoben, wobei der Kühlwalzendichtungsring 16 entlang der Dichtfläche 18 an der Trennwand 15 gleitet, die dazu einfach geeignet und gross genug ausgebildet sein muss. Fig. 4 zeigt einen Ausschnitt der erfindungsgemässen Vorrichtung mit den beiden Walzen 1, 2 in ihrer Montagestellung mit weitem Walzenspalt 7. Die Verschiebung der Kühlwalze entlang der Dichtfläche 18 ist durch einen Vergleich mit ihrer in Fig. 3 dargestellten Betriebsstellung ersichtlich.

In der Montagestellung gemäss Fig. 4 können die beiden Dichtungsringe 16 und 17 nach dem Lösen der radialen Schrauben und dem Entfernen der Halbringe 19, nacheinander über ihre jeweiligen Walzen 1, 2 gleitend demontiert werden.

Durch ihre vorbeschriebene Ausbildung lassen sich jedenfalls die mit dem Produkt in Kontakt kommenden Teile der erfindungsgemäss Vorrichtung einfach demontieren. Im ausgebauten Zustand sind sie individuell leicht zu reinigen. Zwischen den verbleibenden Teile ergibt sich ausreichend Platz, um auch diese effektiv reinigen zu können.

### BEZEICHNUNGSLISTE

- 1: Kühlwalze
- 2: Quetschwalze
- 3: Anpressband
- 4: Umlenkrollen
- 5: Abstreifer
- 6: Brecher
- 7: Walzenspalt
- 8: Strang
- 9: Folie
- 10: Chips
- 11: Schutzhaube
- 12: Maschinengestell
- 13: Maschinenraum
- 14: Prozessbereich
- 15: Trennwand
- 16: Dichtungsring
- 17: Dichtungsring
- 18: Dichtfläche
- 19: Halbringe
- 20: Einschnitt in der Kühlwalze
- 21: Haltering
- 22: Einschnitt in der Quetschwalze

## Patentansprüche

1. Walzenkühlvorrichtung zur kontinuierlichen Überführung einer heissen, fliessfähigen Masse (8) unter Abkühlung in feste Chips (10), mit wenigstens einer Kühlwalze (1), einer Quetschwalze (2) und einem über Umlenkrollen (4) umlaufenden Anpressband (3), wobei die Kühl- (1) und die Quetschwalze (2) dazu dienen, die Masse (8) zu einer dünnen Folie (9) auszurollen, und wobei das Anpressband (3) auf einem Teilumfang der Kühlwalze (1) abläuft und dazu dient, die Folie (9) dort gegen die Kühlwalze (1) zu pressen, **dadurch gekennzeichnet, dass** die Kühlwalze (1), die Quetschwalze (2), das Anpressband (3) und die Umlenkrollen (4) nur von einer Seite aus gehalten und die Walzen (1, 2) nur auf dieser Seite gelagert und von dieser Seite aus angetrieben sind und dass dadurch die Kühlwalze (1), die Quetschwalze (2), das Anpressband (3) und die Umlenkrollen (4) von der anderen Seite her zu Reinigungszwecken zugänglich und/oder demontierbar sind.

2. Walzenkühlvorrichtung nach Anspruch 1, **dadurch gekennzeichnet, dass** sie weiter mit einem Abstreifer (5) und einem Brecher (6) versehen ist, wobei der Brecher (6) dazu dient, die auf der Kühlwalze (1) erstarrte und von dem Abstreifer (5) von der Kühlwalze (1) abgelöste Folie (9) zu zerkleinern, und dass auch diese Teile (5, 6) nur von der genannten Seite aus gehalten, der Brecher (6) nur von dieser Seite aus angetrieben und dadurch von der anderen Seite her zur Reinigungszwecken zugänglich und/oder demontierbar sind.

3. Walzenkühlvorrichtung nach Anspruch 1 oder 2, **dadurch gekennzeichnet, dass** die Kühlwalze (1) und die Quetschwalze (2) jeweils mit einer Dichtung an einer Trennwand (15) gegenüber ihren Lagern, Antrieben und sonstigen Versorgungseinrichtungen abgedichtet ist und dass diese Dichtungen ebenfalls zu der anderen Seite hin demontierbar sind.

4. Walzenkühlvorrichtung nach Anspruch 3, **dadurch gekennzeichnet, dass** die genannten Dichtungen jeweils einen Dichtungsring (16, 17) umfassen und dass die Kühlwalze (1) und die Quetschwalze (2) zur Demontage dieser Dichtungsringe (16. 17) zwischen einer Betriebsstellung mit kleinem Walzenspalt (7) und einer Montagestellung mit grösserem Walzenspalt (7) gegeneinander verstellbar sind.

5. Walzenkühlvorrichtung nach Anspruch 4, **dadurch gekennzeichnet, dass** der Dichtungsring (16) einer der beiden Walzen, vorzugsweise der Kühlwalze (1), angrenzend an die Trennwand (15) auf dieser Walze (1) fixiert ist und gleitend gegenüber der Trennwand (15) dichtet.

6. Walzenkühlvorrichtung nach Anspruch 5, **dadurch gekennzeichnet, dass** zur Verstellung zwischen der Betriebs- und der Montagestellung nur die eine Walze (1), vorzugsweise über einen Excenter, beweglich montiert ist und dass bei einer Verstellung dieser Walze (1) ihr Dichtungsring (16) entlang der Trennwand (15) gleitet.

7. Walzenkühlvorrichtung nach Anspruch 5 oder 6, **dadurch gekennzeichnet, dass** der Dichtungsring (17) der anderen Walze (2) mit Abstand von der Trennwand (15) an einem mit der Trennwand (15) verbundenen Haltering (21) fixiert ist und gleitend auf der anderen Walze (2) dichtet.

8. Walzenkühlvorrichtung nach Anspruch 7, **dadurch gekennzeichnet, dass** die eine Walze (1) mit einem umlaufenden Einschnitt (20) versehen ist, in welchen der Dichtungsring (17) der anderen Walze (2) in der Betriebsstellung eingreift und dass die andere Walze (2) ebenfalls mit einem Einschnitt (22) versehen ist, in welchen der Dichtungsring (16) der einen Walze (1) in der Betriebsstellung eingreift.

9. Walzenkühlvorrichtung nach einem der Ansprüche 3 - 7, **dadurch gekennzeichnet, dass** die Kühlwalze (1) und die Quetschwalze (2), abgesehen von ihrer gegenseitigen Verstellbarkeit zwischen der Betriebs- und Montagestellung, fest montiert sind.

10. Walzenkühlvorrichtung nach einem der Ansprüche 1 - 9, **dadurch gekennzeichnet, dass** die genannten Teile (1 - 4;1 - 6) mit einer Schutzhaube (11) abgedeckt sind.

## Claims

1. A roll cooling device for continuously converting a hot, free-flowing mass (8) into solid chips (10) by means of a cooling process, with at least one chill roll (1), a pinch roll (2) and a pressing band (3) that extends over guide rolls (4), wherein the chill roll (1) and the pinch roll (2) serve for rolling out the mass (8) into a thin film (9), and wherein the pressing band (3) extends over part of the circumference of the chill roll (1) and serves for pressing the film (9) against the chill roll (1) at this location, **characterized in that** the chill roll (1), the pinch roll (2), the pressing band (3) and the guide rolls (4) are only held from one side and the rolls (1, 2) are only supported on and driven from this side, and **in that** the chill roll (1) the pinch roll (2), the pressing band (3) and the guide rolls (4) therefore are accessible for cleaning purposes and/or removable from the other side.

2. The roll cooling device according to Claim 1, **characterized in that** it is furthermore provided with a stripper (5) and a crusher (6), wherein the crusher (6) serves for comminuting the film (9) that has solidified on the chill roll (1) and was removed from the chill roll (1) by the stripper (5), and **in that** these components (5, 6) also are only held from the aforementioned side, wherein the crusher (6) is only driven from this side and thereby accessible for cleaning purposes and/or removable from the other side.

3. The roll cooling device according to Claim 1 or 2, **characterized in that** the chill roll (1) and the pinch roll (2) are respectively sealed relative to their bearings, drives and other supply devices at a partition wall (15) by means of a seal, and **in that** these seals can likewise be removed toward the other side.

4. The roll cooling device according to Claim 3, **characterized in that** the aforementioned seals respectively comprise a sealing ring (16, 17), and **in that** the chill roll (1) and the pinch roll (2) can be adjusted relative to one another between an operating position with small roll gap (7) and an installation position with larger roll gap (7) in order to remove these sealing rings (16, 17).

5. The roll cooling device according to Claim 4, **characterized in that** the sealing ring (16) of one of the two rolls, preferably of the chill roll (1), is fixed on this roll (1) adjacent to the partition wall (15) and seals relative to the partition wall (15) in a sliding fashion.

6. The roll cooling device according to Claim 5, **characterized in that** only one roll (1) is mounted in a movable fashion, preferably by means of a cam, in order to realize the adjustment between the operating position and the installation position, and **in that** the sealing ring (16) of said roll (1) slides along the partition wall (15) during an adjustment of this roll.

7. The roll cooling device according to Claim 5 or 6, **characterized in that** the sealing ring (17) of the other roll (2) is fixed at a distance from the partition wall (15) on a supporting ring (21) that is connected to the partition wall (15) and seals on the other roll (2) in a sliding fashion.

8. The roll cooling device according to Claim 7, **characterized in that** one roll (1) is provided with a circumferential recess (20), into which the sealing ring (17) of the other roll (2) engages in the operating position, and **in that** the other roll (2) is likewise provided with a recess (22), into which the sealing ring (16) of the one roll (1) engages in the operating position.

9. The roll cooling device according to one of Claims 3 - 7, **characterized in that** the chill roll (1) and the pinch roll (2) are rigidly mounted aside from their relative adjustability between the operating position and the installation position.

10. The roll cooling device according to one of Claims 1 - 9, **characterized in that** the aforementioned components (1 - 4; 1 - 6) are covered with a protective hood (11).

## Revendications

1. Dispositif de refroidissement de cylindres pour le transfert continu d'une masse fluide chaude (8) tout en la refroidissant en copeaux solides (10), comportant au moins un cylindre de refroidissement (1), un cylindre presseur (2) et une bande de compression (3) passant autour de rouleaux d'inversion (4), les cylindres de refroidissement (1) et presseur (2) servant à dérouler la masse (8) en un film mince (9) et la bande de compression (3) circulant sur une circonférence partielle du cylindre de refroidissement (1) et servant à y comprimer le film (9) contre le cylindre de refroidissement (1), **caractérisé en ce que** le cylindre de refroidissement (1), le cylindre presseur (2), la bande de compression (3) et les rouleaux d'inversion (4) ne sont maintenus que par un côté et que les cylindres (1, 2) ne s'appuient que sur ce côté et sont entraînés depuis ce côté, et que le cylindre de refroidissement (1), le cylindre presseur (2), la bande de compression (3) et les rouleaux d'inversion (4) sont donc accessibles et/ou démontables par l'autre côté pour les nettoyer.

2. Dispositif de refroidissement de cylindres selon la revendication 1, **caractérisé en ce qu'**il est pourvu en outre d'un racleur (5) et d'un concasseur (6), le concasseur (6) servant à broyer le film (9) solidifié sur le cylindre de refroidissement (1) et détaché du cylindre de refroidissement (1) par le racleur (5), et que ces pièces (5, 6) ne sont également maintenues que par le côté indiqué, que le concasseur (6) n'est entraîné que depuis ce côté et qu'ils sont donc accessibles et/ou démontables par l'autre côté pour les nettoyer.

3. Dispositif de refroidissement de cylindres selon la revendication 1 ou 2, **caractérisé en ce que** le cylindre de refroidissement (1) et le cylindre presseur (2) sont isolés respectivement par un joint au niveau d'une cloison séparatrice (15) par rapport à leurs paliers, commandes et autres dispositifs d'alimentation et que ces joints sont également démontables vers l'autre côté.

4. Dispositif de refroidissement de cylindres selon la revendication 3, **caractérisé en ce que** les joints indiqués comprennent respectivement une bague d'étanchéité (16, 17) et que le cylindre de refroidissement (1) et le cylindre presseur (2) sont réglables l'un par rapport à l'autre entre une position de fonctionnement avec un petit intervalle entre les cylindres (7) et une position de montage avec un plus grand intervalle entre les cylindres (7) pour le démontage de ces bagues d'étanchéité (16, 17).

5. Dispositif de refroidissement de cylindres selon la revendication 4, **caractérisé en ce que** la bague d'étanchéité (16) d'un des deux cylindres, de préférence du cylindre de refroidissement (1), est fixée à la limite de la cloison séparatrice (15) sur ce cylindre (1) et assure une isolation glissante par rapport à la cloison séparatrice (15).

6. Dispositif de refroidissement de cylindres selon la revendication 5, **caractérisé en ce que**, pour le réglage entre la position de fonctionnement et la position de montage, seulement un cylindre (1) est monté de manière mobile, de préférence à l'aide d'un excentrique, et que, lors d'un réglage de ce cylindre (1), sa bague d'étanchéité (16) glisse le long de la cloison séparatrice (15).

7. Dispositif de refroidissement de cylindres selon la revendication 5 ou 6, **caractérisé en ce que** la bague d'étanchéité (17) de l'autre cylindre (2) est fixée à distance de la cloison séparatrice (15) sur une bague de retenue (21) reliée à la cloison séparatrice (15) et assure une isolation glissante par rapport à l'autre cylindre (2).

8. Dispositif de refroidissement de cylindres selon la revendication 7, **caractérisé en ce que** le cylindre (1) est pourvu d'une incision périphérique (20) dans laquelle la bague d'étanchéité (17) de l'autre cylindre (2) s'engrène en position de fonctionnement et que l'autre cylindre (2) est également pourvu d'une incision (22) dans laquelle la bague d'étanchéité (16) le cylindre (1) s'engrène en position de fonctionnement.

9. Dispositif de refroidissement de cylindres selon une des revendications 3 à 7, **caractérisé en ce que** le cylindre de refroidissement (1) et le cylindre presseur (2), hormis leur possibilité de réglage réciproque entre les positions de fonctionnement et de montage, sont montés fixement.

10. Dispositif de refroidissement de cylindres selon une des revendications 1 à 9, **caractérisé en ce que** les pièces citées (1-4 ; 1-6) sont recouvertes d'une hotte protectrice (11).
